# EUROPEAN PATENT APPLICATION

(11) **EP 4 761 218 A1**
(43) Date of publication of application: **17.06.2026**
(21) Application number: 24219102.1
(22) Date of filing: 11.12.2024
(51) Int. Cl.: H04L 67/12, G06F 8/65, G08G 1/00, H04W 4/021, H04W 4/44, H04L 67/00

(54) **COMPUTER SYSTEM AND METHOD FOR HANDLING CONFIGURATION FOR AN AT LEAST PARTLY AUTONOMOUS VEHICLE**

(71) Applicant: Volvo Autonomous Solutions AB, 405 08 Göteborg (SE)
(72) Inventor: Skillsäter, Calle, 644 36 Torshälla (SE); Sjöberg, Johan, 722 19 Västerås (SE)
(74) Representative: Valea AB

(57) **Abstract**

The disclosure relates to a computer system (600) for handling configurations for an at least partly autonomous vehicle (100), the computer system (600) comprising processing circuitry (602) configured to:
- at vehicle startup, determine a current geographical zone in which the vehicle (100) is currently located;
- compare the current geographical zone with a last known geographical zone to determine if the current geographical zone is part of the last known geographical zone or not;
- obtain a new vehicle configuration for the current geographical zone when the current geographical zone is not part of the last known geographical zone; and to
- determine whether or not to update the vehicle (100) with the new vehicle configuration for the current geographical zone.

## Description

### TECHNICAL FIELD

The disclosure relates generally to a computer system, a vehicle, a computer-implemented method, a computer program product and a non-transitory computer-readable storage medium. In particular aspects, the disclosure relates to handling configurations for an at least partly autonomous vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicles which are at least partly autonomous typically require wireless connectivity to communicate with, for example, a site control system. To enable the communication, the vehicle is equipped with a router, modem or similar connectivity device. The connectivity device has a configuration which is provided to it at the production line. It may be necessary to update the configuration when the vehicle arrives at its operation site, and this update procedure is a manual procedure which is time consuming.

Thus, there is a strive to further improve handling configuration for an at least partly autonomous vehicle.

### SUMMARY

According to a first aspect of the disclosure, a computer system for handling configurations for an at least partly autonomous vehicle is provided. The computer system comprises processing circuitry configured to,
- at vehicle startup, determine a current geographical zone in which the vehicle is currently located;
- compare the current geographical zone with a last known geographical zone to determine if the current geographical zone is part of the last known geographical zone or not;
- obtain a new vehicle configuration for the current geographical zone when the current geographical zone is not part of the last known geographical zone; and to
- determine whether or not to update the vehicle with the new vehicle configuration for the current geographical zone.

The first aspect of the disclosure may seek to improve handling of configurations for an at least partly autonomous vehicle. A technical benefit may include that handling of configurations for an at least partly autonomous vehicle is improved. Since the current geographical zone is used as a basis for determining if the vehicle should be updated with the new vehicle configuration, the configuration of the at least partly autonomous vehicle will match the current geographical zone so that the vehicle operates as optimal as possible at the current geographical zone. The handling of the vehicle's configuration is done by a computer system which minimizes manual configuration work done by an operator.

Optionally in some examples, including in at least one preferred example, the processing circuitry may be further configured to update the vehicle with the new vehicle configuration. The new vehicle configuration replaces a current vehicle configuration. A technical benefit may include that handling of configurations for an at least partly autonomous vehicle is improved. When the new vehicle configuration has replaced the current vehicle configuration, the vehicle has a vehicle configuration that is suitable and optimal for the current geographical zone. The new vehicle configuration provides optimal performance of the vehicle, in addition to security, that is relevant for the current geographical zone. Furthermore, it increases connectivity stability between the vehicle and an offboard control system. The possibility of searching for errors and correcting them is also increased when the new vehicle configuration has replaced the current vehicle configuration. The new vehicle configuration may provide support for other features, as compared to the current vehicle configuration.

Optionally in some examples, including in at least one preferred example, the processing circuitry may be further configured to obtain a new vehicle configuration for the current geographical zone when the current geographical zone is part of the last known geographical zone. A technical benefit may include that handling of configurations for an at least partly autonomous vehicle is improved. The new vehicle configuration may be obtained even when the current geographical zone is part of the last known geographical zone. This new vehicle configuration may for example be an updated and newer version of the current vehicle configuration. The new vehicle configuration provides optimal performance of the vehicle, in addition to security, that is relevant for the current geographical zone. Furthermore, it increases connectivity stability between the vehicle and an offboard control system. The possibility of searching for errors and correcting them is also increased when the new vehicle configuration has replaced the current vehicle configuration. The new vehicle configuration may provide support for other features, as compared to the current vehicle configuration.

Optionally in some examples, including in at least one preferred example, the processing circuitry may be further configured to determine whether or not the current vehicle configuration is correct for the current geographical zone, and to update the vehicle with the new vehicle configuration when it is not correct. A technical benefit may include that handling of configurations for an at least partly autonomous vehicle is improved. Having a vehicle configuration that is correct for the current geographical zone may improve the network connectivity. With a vehicle configuration that is correct for the current geographical zone, the vehicle may be provided with a configuration that complies with local regulations in the current geographical zones, for example related to frequency bands, power output etc., it may comply with local systems at the current geographical zones. Another technical benefit may be that security in communication onboard the vehicle and between the vehicle and offboard systems within the current geographical zone may be improved etc.

Optionally in some examples, including in at least one preferred example, the processing circuitry may be further configured to, when the current vehicle configuration is determined to be not correct, determine that there is an indication of that at least part of the vehicle has been tampered with. A technical benefit may include that handling of configurations for an at least partly autonomous vehicle is improved. The tampering may comprise an attempt to make the wrong configuration. With the indication that the vehicle has been tampered with, necessary counter measuring actions may be triggered to remove or reduce any damage caused by the tampering. With the indication of the tampering, it may be possible to perform troubleshooting as early as possible.

Optionally in some examples, including in at least one preferred example, the processing circuitry may be further configured to maintain the current vehicle configuration when it is correct. A technical benefit may include that handling of configurations for an at least partly autonomous vehicle is improved. When the current vehicle configuration is correct, it may not be necessary to perform any update of the vehicle configuration such that it is not necessary to allocate time and computing resources for performing an update. The vehicle may instead use the time and computing resources for other tasks, e.g. connectivity related tasks.

Optionally in some examples, including in at least one preferred example, the current vehicle configuration may be determined to be correct when it corresponds to a predetermined configuration setting. A technical benefit may include that handling of configurations for an at least partly autonomous vehicle is improved. Using the predetermined configuration setting as the criteria for determining that the current vehicle configuration is correct is an easy and quick way of determining the correctness.

Optionally in some examples, including in at least one preferred example, the processing circuitry may be further configured to maintain a current vehicle configuration for the current geographical zone when the current geographical zone is part of the last known geographical zone. A technical benefit may include that handling of configurations for an at least partly autonomous vehicle is improved. When the current geographical zone is part of the last known geographical zone, it may be an indication that vehicle has not moved out of the last known geographical zone. The current vehicle configuration is therefore still valid, and no computational power or time needs to be spent on updating the vehicle configuration.

According to a second aspect of the disclosure, an at least partly autonomous vehicle is provided. The at least partly autonomous vehicle comprises the computer system of the first aspect. The second aspect of the disclosure may seek to improve handling of configurations for an at least partly autonomous vehicle. A technical benefit may include that handling of configurations for an at least partly autonomous vehicle is improved. Technical benefits of the second aspect of the disclosure may correspond to the technical benefits of the first aspect of the disclosure. Further, all examples of the first aspect are applicable to and combinable with all examples of the second aspect, and vice versa.

According to a third aspect of the disclosure, a computer-implemented method for handling configurations for an at least partly autonomous vehicle is provided. The method comprising:
- at vehicle startup, determining, by processing circuitry of a computer system, a current geographical zone in which the vehicle is currently located;
- comparing, by the processing circuitry, the current geographical zone with a last known geographical zone to determine if the current geographical zone is part of the last known geographical zone or not;
- obtaining, by the processing circuitry, a new vehicle configuration for the current geographical zone when the current geographical zone is not part of the last known geographical zone; and
- determining, by the processing circuitry, whether or not to update the vehicle with the new vehicle configuration for the current geographical zone.

The third aspect of the disclosure may seek to improve handling of configurations for an at least partly autonomous vehicle. A technical benefit may include that handling of configurations for an at least partly autonomous vehicle is improved. Technical benefits of the third aspect of the disclosure may correspond to the technical benefits of the first and second aspects of the disclosure. Further, all examples of the first and second aspects are applicable to and combinable with all examples of the third aspect, and vice versa.

Since the current geographical zone is used as a basis for determining if the vehicle should be updated with the new vehicle configuration, the configuration of the at least partly autonomous vehicle will match the current geographical zone so that the vehicle operates as optimal as possible at the current geographical zone. The handling of the vehicle's configuration is done by a computer system which minimizes manual configuration work done by an operator.

Optionally in some examples, including in at least one preferred example, the method may comprise:
- updating, by the processing circuitry, the vehicle with the new vehicle configuration, wherein the new vehicle configuration replaces a current vehicle configuration.

A technical benefit may include that handling of configurations for an at least partly autonomous vehicle is improved. When the new vehicle configuration has replaced the current vehicle configuration, the vehicle has a vehicle configuration that is suitable and optimal for the current geographical zone. The new vehicle configuration provides optimal performance of the vehicle, in addition to security, that is relevant for the current geographical zone. Furthermore, it increases connectivity stability between the vehicle and an offboard control system. The possibility of searching for errors and correcting them is also increased when the new vehicle configuration has replaced the current vehicle configuration. The new vehicle configuration may provide support for other features, as compared to the current vehicle configuration.

Optionally in some examples, including in at least one preferred example, the method may comprise:
- obtaining, by the processing circuitry, a new vehicle configuration for the current geographical zone when the current geographical zone is part of the last known geographical zone.

A technical benefit may include that handling of configurations for an at least partly autonomous vehicle is improved. The new vehicle configuration may be obtained even when the current geographical zone is part of the last known geographical zone. This new vehicle configuration may for example be an updated and newer version of the current vehicle configuration. The new vehicle configuration provides optimal performance of the vehicle, in addition to security, that is relevant for the current geographical zone. Furthermore, it increases connectivity stability between the vehicle and an offboard control system. The possibility of searching for errors and correcting them is also increased when the new vehicle configuration has replaced the current vehicle configuration. The new vehicle configuration may provide support for other features, as compared to the current vehicle configuration.

Optionally in some examples, including in at least one preferred example, the method may comprise:
- determining, by the processing circuitry, whether or not the current vehicle configuration is correct for the current geographical zone; and to
- updating, by the processing circuitry, the vehicle with the new vehicle configuration when it is not correct.

A technical benefit may include that handling of configurations for an at least partly autonomous vehicle is improved. Having a vehicle configuration that is correct for the current geographical zone may improve the network connectivity. With a vehicle configuration that is correct for the current geographical zone, the vehicle may be provided with a configuration that complies with local regulations in the current geographical zones, for example related to frequency bands, power output etc., it may comply with local systems at the current geographical zones. Another technical benefit may be that security in communication onboard the vehicle and between the vehicle and offboard systems within the current geographical zone may be improved etc.

According to a fourth aspect of the disclosure, a computer program product is provided. The computer program product comprises program code for performing, when executed by the processing circuitry, the method of the third aspect. The fourth aspect of the disclosure may seek to improve handling of configurations for an at least partly autonomous vehicle. A technical benefit may include that handling of configurations for an at least partly autonomous vehicle is improved. Technical benefits of the fourth aspect of the disclosure may correspond to the technical benefits of the first, second and third aspects of the disclosure. Further, all examples of the first, second and third aspects are applicable to and combinable with all examples of the fourth aspect, and vice versa.

According to a fifth aspect of the disclosure, a non-transitory computer-readable storage medium is provided. The non-transitory computer-readable storage medium comprises instructions, which when executed by the processing circuitry, cause the processing circuitry to perform the method of the third aspect. The fifth aspect of the disclosure may seek to improve handling of configurations for an at least partly autonomous vehicle. A technical benefit may include that handling of configurations for an at least partly autonomous vehicle is improved. Technical benefits of the fifth aspect of the disclosure may correspond to the technical benefits of the first, second, third and fourth aspects of the disclosure. Further, all examples of the first, second, third and fourth aspects are applicable to and combinable with all examples of the fifth aspect, and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary drawing illustrating a vehicle, according to an example.
**FIG. 2** is a flow chart of an exemplary method, according to an example.
**FIG. 3** is an exemplary drawing illustrating the vehicle and geographical zones, according to an example.
**FIG. 4** is another view of **FIG. 1****,** according to an example.
**FIG. 5** is a flow chart of an exemplary method, according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Vehicles which are at least partly autonomous typically require wireless connectivity to communicate with, for example, a site control system. To enable the communication, the vehicle is equipped with a router, modem or similar connectivity device. The connectivity device has a configuration which is provided to it at the production line. It may be necessary to update the configuration when the vehicle arrives at its operation site, and this update procedure is a manual procedure which is time consuming.

An at least partly autonomous vehicle typically require wireless connectivity to communicate with a site control system at the site in which it operates. The site may be referred to as a geographical zone or geographical area. Typically, the configuration of the wireless connectivity device, e.g. router or modem, comprised in the vehicle is site specific. This brings a complexity that the vehicle needs to have one configuration done on the production line and then update this at the operating site. It will also be a challenge if a vehicle is moved from one operating site to another. Today this problem is handled with a manual process which is time consuming, and this will limit the possibility to scale in a cost efficient way.

Thus, there is a strive to further improve handling configuration for an at least partly autonomous vehicle.

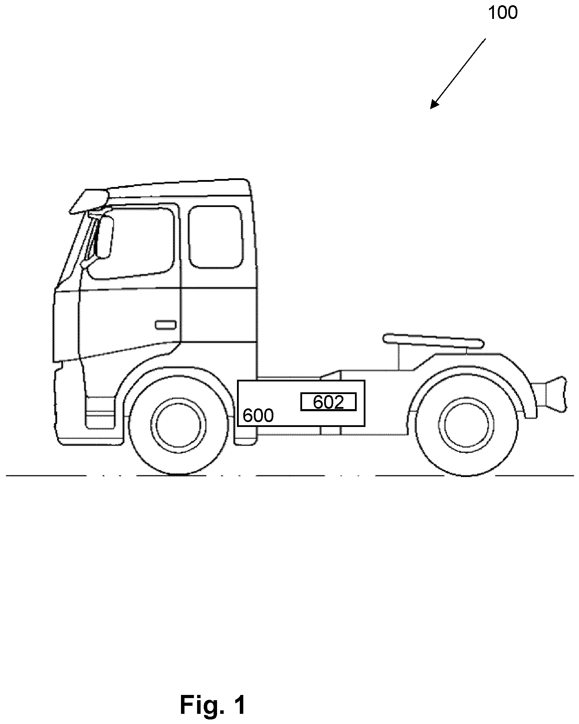

FIG. 1 is an exemplary drawing illustrating a vehicle 100, according to an example. The vehicle 100 is a heavy-duty vehicle, such as truck, bus, and construction equipment, among other vehicle types. Although the disclosure may be described with respect to a particular vehicle, the disclosure is not restricted to any particular vehicle, but may be also used in other vehicles such as, trailers, wheel loaders, articulated haulers, excavators, backhoe loaders, passenger cars, marine vessels etc. It may also be applied in various industrial construction machines or working machines.

The vehicle **100** may be a truck for towing one or more trailers (not shown). It shall however be understood that the vehicle may be any other type of vehicle, such as another type of truck, a bus, a passenger car, and construction equipment, such as an excavator, a wheel loader, etc.

The vehicle **100** may be a fully electric vehicle or a hybrid vehicle, or it may be driven using only a combustion engine. The vehicle **100** may comprise one or more electric motors/generators and/or an internal combustion engine for driving the vehicle **100.**

The vehicle **100** may be operated by a user (not shown) and/or be at least partly automatically driven, i.e., it may be a vehicle comprising autonomous driving capabilities. The vehicle **100** is an at least partly autonomous vehicle **100.** When the vehicle **100** is at least partly autonomous, it may be arranged to perform some operations without direct human intervention, but still require human intervention for other operations, or it may be arranged to perform all operations without direct human intervention. The operations may be driving operations or any other operations. Thus, the vehicle **100** may be partly or completely autonomous.

The term vehicle will be used herein when referring to any of the above types of vehicles.

This disclosure relates to using a geographical based configuration control during startup of the vehicle **100.** If the vehicle **100** has moved to another geographical zone than it is configured for, a configuration controller may trigger an update to match the new geographical zone. This disclosure relates to connectivity devices in the vehicle **100** and the handling of configuration for connectivity devices that will run in a geographical zone such as a private network with site specific configuration needs at certain site.

Onboard the vehicle **100,** there may be a navigation sensor, a configuration controller and a memory comprising information indicating the last known geographical zone and a vehicle configuration database.

The at least partly autonomous vehicle may operate in a confined area, and they may be typically turned off during transport to a new location. This means that it is at the event of a startup that it is of interest to check if the location has changed and if a potential update of the configuration is needed.

The vehicle **100** comprises a computer system **600.** The computer system **600** may be completely comprised in the vehicle **100,** or a first part of the computer system **600** is located onboard the vehicle **100** and a second part of the computer system **600** is located offboard the vehicle **100,** e.g. in a location remote from the vehicle **100,** or the whole computer system **600** may be located offboard the vehicle **100.** When the computer system 600 is at least partly located offboard the vehicle **100,** the offboard located computer system 600 is arranged to be connected to the vehicle **100.**

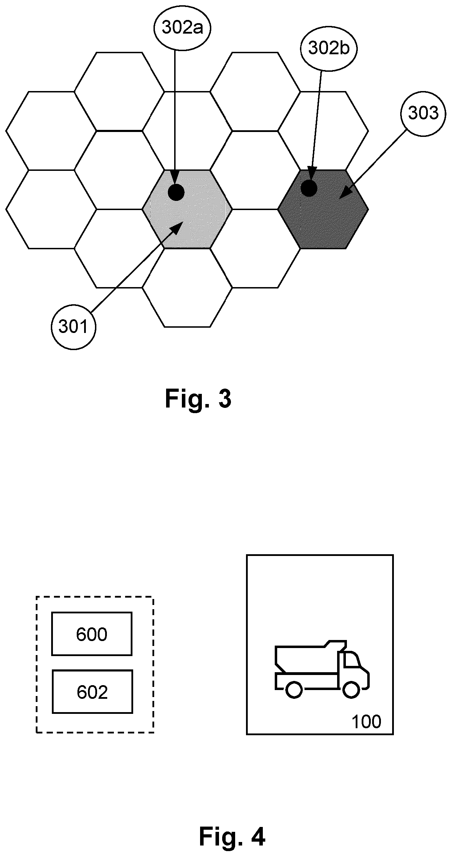

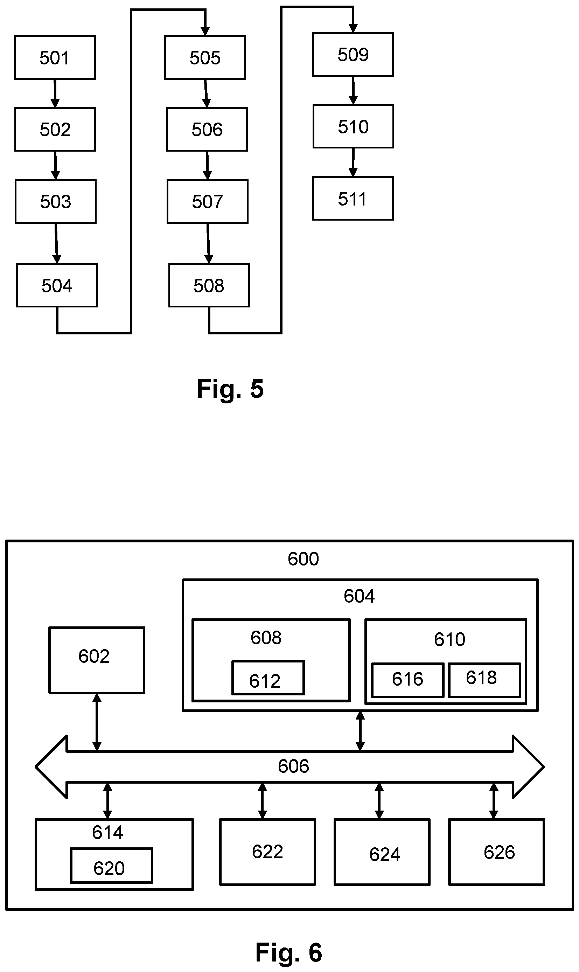

The computer system **600** may comprise a processing circuitry **602,** or the computer system **600** may be arranged to be connected to a processing circuitry **602.** The computer system **600** and the processing circuitry **602** is illustrated in **FIG. 4** and in **FIG. 6****.**

Any of the examples herein may be performed by at least one of the computer system **600** and the processing circuitry **602.** In other words, at least one of the computer system **600** and the processing circuitry **602** may be configured to perform the examples herein.

At least one of the computer system **600** and the processing circuitry **602,** may be comprised in the vehicle **100** or remote to the vehicle **100** such as in a server or cloud service.

At least one of the computer system **600** and the processing circuitry **602** may be arranged to be able to at least one of control and communicate with any suitable entity of the vehicle **100.**

At least one of the computer system **600** and the processing circuitry **602** may for example be able to communicate with the vehicle **100,** such as to receive and transmit information, e.g., via a communications interface of the computer system **600.** The vehicle **100** may communicate with the computer system **600** using a communications interface, e.g., a wireless or wired transceiver e.g., for wired or wireless communications with the computer system **600.** The communications interface may be comprised in the vehicle **100.**

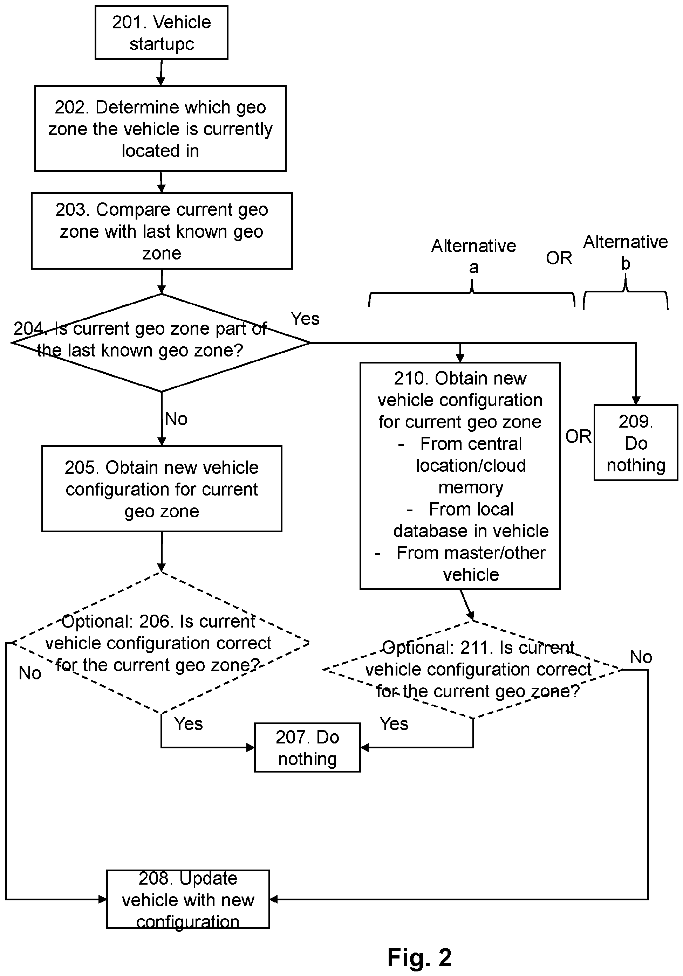

**FIG. 2** is a flow chart of an exemplary method, according to an example. The method may be performed by a computer system **600** or a processing circuitry **602** comprised in the computer system **600.** The method comprises at least one of the following steps, which steps may be performed in any suitable order than described below:

Step **201:** The vehicle starts up. Startup of the vehicle **100** may comprise that the ignition is turned on, that an on button is activated, just to mention some examples. At vehicle startup, the vehicle **100** comprises a current vehicle configuration. The current vehicle configuration may be a configuration connectivity. The current vehicle configuration may be for a wireless connectivity device, e.g. router or modem, arranged to enable the vehicle **100** to wirelessly connect to another vehicle, an offboard system such as a site control system, etc.

Step **202:** It is determined which geographical zone the vehicle **100** is currently located in. In other words, a current geographical zone is determined. The current geographical zone may be determined using any suitable method. For example, the current geographical zone may be determined based on navigation information indicating a current position of the vehicle **100** and comparing the navigation information with information in a geographical zone database. If a result of the comparison indicates that there is a match with the navigation information and a particular geographical zone in the geographical zone database, then it may be determined that the vehicle **100** is currently in that particular geographical zone.

The navigation information indicates the current position of the vehicle **100** and may be obtained from a navigation system comprised in the vehicle **100.**

The geographical zone database may be stored locally onboard the vehicle **100,** it may be obtained from another vehicle or a site infrastructure. The geographical zone database may be obtained over a Vehicle-to-everything (V2X) communication link or any other suitable communication link.

The geographical zone may be of any suitable size. The geographical zone may be referred to as a geographical area. The geographical zone may be a confined area. The geographical zone may be a private network or a public network.

The geographical zone may be represented by a set of positioning coordinates, it may be identified by a central point and a certain distance extending from the central point. The geographical zone may be represented by a street address, it may be represented by any type of boarders such as country borders, city borders. The geographical zone may have any suitable size and shape. One geographical zone may overlap with another geographical zone or not.

Step **203:** The current geographical zone may be compared with a last known geographical zone for the vehicle **100.** The last known geographical zone may be the geographical zone that the vehicle **100** was located in before vehicle startup. In other words, the vehicle **100** has been shut down before starting up in step **201.**

Step **204:** It is checked whether or not the current geographical zone is at least partially part of the last known geographical zone. If it is at least part of the last known geographical zone, as indicated with yes in **FIG. 2****,** the method proceeds to steps **209** or **210.** If it is not at least part of the last known geographical zone, as indicated with no in **FIG. 2****,** the method proceeds to step **205.**

Step **205:** This step is performed if the current geographical zone is not at least part of the last known geographical zone. In other words, there is no overlap between the current geographical zone and the last known geographical zone. The reason for the lack of overlap may be that the vehicle **100** has moved.

A new vehicle configuration for the current geographical zone is obtained. The new vehicle configuration may be obtained from any one or a combination of: a central location, e.g. a cloud memory, a local database onboard the vehicle **100,** and from another vehicle.

Step **206:** It may be checked if the current vehicle configuration is correct for the current geographical zone. If it is correct, as indicated with yes in **FIG. 2****,** the method proceeds to step **207.** If it is not correct, as indicated with no in **FIG. 2****,** the method proceeds to step **208.** The current vehicle configuration is determined to be correct when it corresponds to a predetermined configuration setting. For example, if the current vehicle configuration that is read out, e.g. from the HW such as the router, may be either single important parameters, such as the APN/DNN that is crucial to allow connection to the network at all, or it may be the complete current vehicle configuration file that is read out and compared by version number, checksum or similar.

Having a vehicle configuration that is correct for the current geographical zone may improve the network connectivity. With a vehicle configuration that is correct for the current geographical zone, the vehicle may be provided with a configuration that complies with local regulations in the current geographical zones, for example related to frequency bands, power output etc., it may comply with local systems at the current geographical zones. Another technical benefit may be that security in communication onboard the vehicle and between the vehicle and offboard systems within the current geographical zone may be improved etc.

Step **207:** Step **211** may be comprised in alternative a. This step may be performed if the current vehicle configuration is correct for the current geographical zone, as indicated with yes in **FIG. 2****.** The current vehicle configuration is determined to be correct when it corresponds to a predetermined configuration setting. It may not be necessary to take any action, and the current vehicle configuration is maintained.

Step **208:** Step **211** may be comprised in alternative a. This step may be performed if the current vehicle configuration is not correct for the current geographical zone, as indicated with no in **FIG. 2****.** The current vehicle configuration is determined to not be correct when it does not correspond to a predetermined configuration setting. The vehicle **100** is updated with the new vehicle configuration, i.e. the new vehicle configuration obtained in step **205.**

Step **209:** This step may be an alternative to step **210.** Step **209** may be alternative b, i.e. an alternative to alternative a. Step **209** may be performed instead of step **210.** This step may be performed if the current geographical zone is at least part of the last known geographical zone, as indicated with yes in **FIG. 2****.** When the current geographical zone is at least part of the last known geographical zone, nothing needs to be done, and the current vehicle configuration may be maintained. In other words, no update of the vehicle configuration may be necessary.

Step **210:** This step may be an alternative to step **209.** Step **210** may be comprised in alternative a. Step **210** may be performed instead of step **209.** This step may be performed if the current geographical zone is at least part of the last known geographical zone, as indicated with yes in **FIG. 2****,** i.e. there is an overlap between the current geographical zone and the last known geographical zone. If the vehicle **100** has not moved, it might still be scenarios where the configuration needs to be updated: Some examples of such scenarios are as follows:
- the configuration has been modified/tampered with,
- there is a new version of the configuration, and this is the reason for the update.

A new vehicle configuration for the current geographical zone is obtained. The new vehicle configuration may be obtained from any one or a combination of: a central location, e.g. a cloud memory, a local database onboard the vehicle **100,** and from another vehicle.

Step **211:** Step **211** may be comprised in alternative a. It may be checked if the current vehicle configuration is correct for the current geographical zone. If it is correct, as indicated with yes in **FIG. 2****,** the method proceeds to step **207.** If it is not correct, as indicated with no in **FIG. 2****,** the method proceeds to step **208.** The current vehicle configuration is determined to be correct when it corresponds to a predetermined configuration setting.

As seen from steps **205** and step **210,** the new vehicle configuration may be obtained both when there is an overlap between the current geographical zone and the last known geographical zone, and also when there is no overlap between them.

**FIG. 3** is an exemplary drawing illustrating the vehicle **100** and geographical zones, according to an example. At vehicle startup, the onboard configuration controller may determine what geographical zone **301** the vehicle position **302a** is part of. If it is part of the same zone as the last known geographical zone **301,** no action may be taken. If the vehicle position **302b** instead is concluded to be part of another zone **303** than before, a configuration process may be started, where the configuration controller updates relevant parameters in other devices in the onboard vehicle system. The other device may be hardware such as for example a modem, a router, a telematic gateway etc. Depending on the setup of the machine, it may be necessary to set NTP etc. in other onboard computers unless this is distributed via the router.

For example, the APN/DNN, DNS and/or NTP settings in a vehicle router may be updated. The update may be of other hardware with a site specific configuration. The other hardware may be for example is the ADN that basically is a Linux PC onboard the vehicle **100.** It needs to have the DNS to know where to look-up addresses and NTP settings to get the correct time,

The vehicle configuration database may be downloaded to the vehicle **100** for the first time on the production line. In all cases where the geographical zones have connectivity to enable communication to a central server, the vehicle configuration database may be updated, for example in the case of a new implementation.

Since the vehicle **100** may comprise a local vehicle configuration database, it may also be possible to perform a check if the current vehicle configuration of a vehicle **100,** e.g. the configuration of a connectivity device comprised in the vehicle **100,** is correct compared to the vehicle configuration settings stored in the vehicle configuration database. This may enable the possibility to detect if the vehicle, e.g. the connectivity device, has been tampered with in an attempt to make the wrong configuration. It may also enable automatic configuration if a hardware is replaced on the vehicle **100.**

**FIG. 4** is another view of **FIG. 1****,** according to an example. **FIG. 4** illustrates an at least partly autonomous vehicle **100.** **FIG. 4** illustrates a computer system **600** for handling configurations for an at least partly autonomous vehicle **100.**

The computer system **600** comprises the processing circuitry **602,** as indicated with a dotted box in **FIG. 4****,** or the computer system is arranged to be connected to the processing circuitry **602.**

The processing circuitry **602** is configured to, at vehicle startup, determine a current geographical zone in which the vehicle **100** is currently located.

The processing circuitry **602** is configured to compare the current geographical zone with a last known geographical zone to determine if the current geographical zone is part of the last known geographical zone or not. The last known geographical zone may be a first geographical zone, and the current geographical zone may be a second geographical zone.

The processing circuitry **602** is configured to obtain a new vehicle configuration for the current geographical zone when the current geographical zone is not part of the last known geographical zone.

The processing circuitry **602** is configured to determine whether or not to update the vehicle **100** with the new vehicle configuration for the current geographical zone.

The processing circuitry **602** may be configured to update the vehicle **100** with the new vehicle configuration. The new vehicle configuration replaces a current vehicle configuration. The current vehicle configuration may be a first vehicle configuration, and the new vehicle configuration may be a second vehicle configuration.

The processing circuitry **602** may be configured to obtain a new vehicle configuration for the current geographical zone when the current geographical zone is part of the last known geographical zone.

The processing circuitry **602** may be configured to determine whether or not the current vehicle configuration is correct for the current geographical zone.

The processing circuitry **602** may be configured to update the vehicle **100** with the new vehicle configuration when it is not correct. Updating the vehicle **100** with the new vehicle configuration may comprise configuring the vehicle **100** with the new vehicle configuration.

The processing circuitry **602** may be configured to, when the current vehicle configuration is determined to be not correct, determine that there is an indication of that at least part of the vehicle **100** has been tampered with. The indication of the tampering may be a trigger to take an action such as for example activating an alarm, performing troubleshooting, deactivating at least part of the vehicle **100,** just to mention some examples.

The processing circuitry **602** may be configured to maintain the current vehicle configuration when it is correct. The current vehicle configuration may be determined to be correct when it corresponds to a predetermined configuration setting.

The processing circuitry **602** may be configured to maintain a current vehicle configuration for the current geographical zone when the current geographical zone is part of the last known geographical zone.

The at least partly autonomous vehicle **100** comprises the computer system **600.**

**FIG. 5** is a flow chart of an exemplary method, according to an example. The method is a computer-implemented method for handling configurations for an at least partly autonomous vehicle **100.** The steps may be performed by the processing circuitry **602** of the computer system **600.** The method comprises at least one of the following steps, which steps may be performed in any suitable order than described below:

Step **501:** This step corresponds to step **202** in **FIG. 2****.** At vehicle startup, the processing circuitry **602** of the computer system **600** determines a current geographical zone in which the vehicle **100** is currently located.

Step **502:** This step corresponds to steps 203, 204 in **FIG. 2****.** The processing circuitry **602** compares the current geographical zone with a last known geographical zone to determine if the current geographical zone is part of the last known geographical zone or not.

Step **503:** This step corresponds to step **205** in **FIG. 2****.** The processing circuitry **602** obtains a new vehicle configuration for the current geographical zone when the current geographical zone is not part of the last known geographical zone.

Step **504:** This step corresponds to steps **206, 207, 210** in **FIG. 2****.** The processing circuitry **602** determines whether or not to update the vehicle **100** with the new vehicle configuration for the current geographical zone.

Step **505:** This step corresponds to step **208** in **FIG. 2****.** The processing circuitry **602** may update the vehicle **100** with the new vehicle configuration. The new vehicle configuration replaces a current vehicle configuration.

Step **506:** This step corresponds to step **210** in **FIG. 2****.** The processing circuitry 602 may obtain a new vehicle configuration for the current geographical zone when the current geographical zone is part of the last known geographical zone.

Step **507:** This step corresponds to steps **206, 211** in **FIG. 2****.** The processing circuitry **602** determines whether or not the current vehicle configuration is correct for the current geographical zone.

Step **508:** This step corresponds to step **208** in **FIG. 2****.** The processing circuitry **602** may update the vehicle 100 with the new vehicle configuration when it is not correct.

Step **509:** This step corresponds to step **210** in **FIG. 2****.** The processing circuitry **602** may be configured to, when the current vehicle configuration is determined to be not correct, determine that there is an indication of that at least part of the vehicle **100** has been tampered with.

Step **510:** This step corresponds to step **207** in **FIG. 2****.** The processing circuitry **602** may be configured to maintain the current vehicle configuration when it is correct. The current vehicle configuration may be determined to be correct when it corresponds to a predetermined configuration setting.

Step **511:** This step corresponds to step **209** in **FIG. 2****.** The processing circuitry **602** may be configured to maintain a current vehicle configuration for the current geographical zone when the current geographical zone is part of the last known geographical zone.

A computer program product comprising program code for performing, when executed by the processing circuitry **602,** the method described herein.

A non-transitory computer-readable storage medium comprising instructions, which when executed by the processing circuitry **602,** cause the processing circuitry **602** to perform the method described herein.

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device
interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of examples 1-20. Each Example can be combined with any of the other examples discussed above.

**Example 1:** A computer system **600** for handling configurations for an at least partly autonomous vehicle **100,** the computer system **600** comprising processing circuitry **602** configured to:
- at vehicle startup, determine a current geographical zone in which the vehicle **100** is currently located;
- compare the current geographical zone with a last known geographical zone to determine if the current geographical zone is part of the last known geographical zone or not;
- obtain a new vehicle configuration for the current geographical zone when the current geographical zone is not part of the last known geographical zone; and to
- determine whether or not to update the vehicle **100** with the new vehicle configuration for the current geographical zone.

**Example 2:** The computer system **600** of example 1, wherein the processing circuitry **602** is further configured to:
- update the vehicle **100** with the new vehicle configuration, wherein the new vehicle configuration replaces a current vehicle configuration.

**Example 3:** The computer system **600** of any of the preceding examples, wherein the processing circuitry **602** is further configured to:
- obtain a new vehicle configuration for the current geographical zone when the current geographical zone is part of the last known geographical zone.

**Example 4:** The computer system **600** of any of the preceding examples, wherein the processing circuitry **602** is further configured to:
- determine whether or not the current vehicle configuration is correct for the current geographical zone; and to
- update the vehicle **100** with the new vehicle configuration when it is not correct.

**Example 5:** The computer system **600** of any of the preceding examples, wherein the processing circuitry **602** is further configured to:
- when the current vehicle configuration is determined to be not correct, determine that there is an indication of that at least part of the vehicle **100** has been tampered with.

**Example 6:** The computer system **600** of any of the preceding examples, wherein the processing circuitry **602** is further configured to:
- maintain the current vehicle configuration when it is correct.

**Example 7:** The computer system **600** of any of the preceding examples, wherein the current vehicle configuration is determined to be correct when it corresponds to a predetermined configuration setting.

**Example 8:** The computer system **600** of any of the preceding examples, wherein the processing circuitry **602** is further configured to:
- maintain a current vehicle configuration for the current geographical zone when the current geographical zone is part of the last known geographical zone.

**Example 9:** An at least partly autonomous vehicle **100** comprising the computer system 600 of any of examples 1-8.

**Example 10:** A computer-implemented method for handling configurations for an at least partly autonomous vehicle **100,** the method comprising:
- at vehicle startup, *determining* **202, 501,** by processing circuitry **602** of a computer system **600,** a current geographical zone in which the vehicle **100** is currently located;
- *comparing* **203, 204, 502,** by the processing circuitry **602,** the current geographical zone with a last known geographical zone to determine if the current geographical zone is part of the last known geographical zone or not;
- *obtaining* **205, 503,** by the processing circuitry **602,** a new vehicle configuration for the current geographical zone when the current geographical zone is not part of the last known geographical zone; and
- *determining* **206, 207, 210, 504,** by the processing circuitry **602,** whether or not to update the vehicle **100** with the new vehicle configuration for the current geographical zone.

**Example 11:** The method of example 10, comprising:
- *updating* **208, 505,** by the processing circuitry **602,** the vehicle **100** with the new vehicle configuration, wherein the new vehicle configuration replaces a current vehicle configuration.

**Example 12:** The method of any of examples 10-11, comprising:
- *obtaining* **210, 506,** by the processing circuitry **602,** a new vehicle configuration for the current geographical zone when the current geographical zone is part of the last known geographical zone.

**Example 13:** The method of any of examples 10-12, comprising:
- *determining* **206, 211, 507,** by the processing circuitry **602,** whether or not the current vehicle configuration is correct for the current geographical zone; and
- *updating* **208, 508,** by the processing circuitry **602,** the vehicle **100** with the new vehicle configuration when it is not correct.

**Example 14:** The method of any of examples 10-13, comprising:
- when the current vehicle configuration is determined to be not correct, *determining* **509,** by the processing circuitry **602,** that there is an indication of that at least part of the vehicle **100** has been tampered with.

**Example 15:** The method of example 14, comprising:
- *determining* an action to be taken when there is an indication of that at least part of the vehicle **100** has been tampered with.

**Example 16:** The method of any of examples 10-15, comprising:
- maintaining **510,** by the processing circuitry **602,** the current vehicle configuration when it is correct.

**Example 17:** The method of any of examples 10-16, wherein the current vehicle configuration is determined to be correct when it corresponds to a predetermined configuration setting.

**Example 18:** The method of any of examples 10-17, further comprising:
- maintaining **511,** by the processing circuitry **602,** a current vehicle configuration for the current geographical zone when the current geographical zone is part of the last known geographical zone.

**Example 19:** A computer program product comprising program code for performing, when executed by a processing circuitry **602,** the method of any of examples 10-18.

**Example 20:** A non-transitory computer-readable storage medium comprising instructions, which when executed by a processing circuitry **602,** cause the processing circuitry **602** to perform the method of any of examples 10-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (600) for handling configurations for an at least partly autonomous vehicle (100), the computer system (600) comprising processing circuitry (602) configured to:
at vehicle startup, determine a current geographical zone in which the vehicle (100) is currently located;
compare the current geographical zone with a last known geographical zone to determine if the current geographical zone is part of the last known geographical zone or not;
obtain a new vehicle configuration for the current geographical zone when the current geographical zone is not part of the last known geographical zone; and to
determine whether or not to update the vehicle (100) with the new vehicle configuration for the current geographical zone.

2. The computer system (600) of claim 1, wherein the processing circuitry (602) is further configured to:
update the vehicle (100) with the new vehicle configuration, wherein the new vehicle configuration replaces a current vehicle configuration.

3. The computer system (600) of any of the preceding claims, wherein the processing circuitry (602) is further configured to:
obtain a new vehicle configuration for the current geographical zone when the current geographical zone is part of the last known geographical zone.

4. The computer system (600) of any of the preceding claims, wherein the processing circuitry (602) is further configured to:
determine whether or not the current vehicle configuration is correct for the current geographical zone; and to
update the vehicle (100) with the new vehicle configuration when it is not correct.

5. The computer system (600) of any of the preceding claims, wherein the processing circuitry (602) is further configured to:
when the current vehicle configuration is determined to be not correct, determine that there is an indication of that at least part of the vehicle (100) has been tampered with.

6. The computer system (600) of any of the preceding claims, wherein the processing circuitry (602) is further configured to:
maintain the current vehicle configuration when it is correct.

7. The computer system (600) of any of the preceding claims, wherein the current vehicle configuration is determined to be correct when it corresponds to a predetermined configuration setting.

8. The computer system (600) of any of the preceding claims, wherein the processing circuitry (602) is further configured to:
maintain a current vehicle configuration for the current geographical zone when the current geographical zone is part of the last known geographical zone.

9. An at least partly autonomous vehicle (100) comprising the computer system (600) of any of claims 1-8.

10. A computer-implemented method for handling configurations for an at least partly autonomous vehicle (100), the method comprising:
at vehicle startup, *determining* (202, 501), by processing circuitry (602) of a computer system (600), a current geographical zone in which the vehicle (100) is currently located;
*comparing* (203, 204, 502), by the processing circuitry (602), the current geographical zone with a last known geographical zone to determine if the current geographical zone is part of the last known geographical zone or not;
*obtaining* (205, 503), by the processing circuitry (602), a new vehicle configuration for the current geographical zone when the current geographical zone is not part of the last known geographical zone; and
*determining* (206, 207, 210, 504), by the processing circuitry (602), whether or not to update the vehicle (100) with the new vehicle configuration for the current geographical zone.

11. The method of claim 10, comprising:
*updating* (208, 505), by the processing circuitry (602), the vehicle (100) with the new vehicle configuration, wherein the new vehicle configuration replaces a current vehicle configuration.

12. The method of any of claims 10-11, comprising:
*obtaining* (210, 506), by the processing circuitry (602), a new vehicle configuration for the current geographical zone when the current geographical zone is part of the last known geographical zone.

13. The method of any of claims 10-12, comprising:
*determining* (206, 211, 507), by the processing circuitry (602), whether or not the current vehicle configuration is correct for the current geographical zone; and
*updating* (208, 508), by the processing circuitry (602), the vehicle (100) with the new vehicle configuration when it is not correct.

14. A computer program product comprising program code for performing, when executed by a processing circuitry (602), the method of any of claims 10-13.

15. A non-transitory computer-readable storage medium comprising instructions, which when executed by a processing circuitry (602), cause the processing circuitry (602) to perform the method of any of claims 10-13.
